# EUROPÄISCHE PATENTSCHRIFT

(11) **EP 3 486 137 B1**
(45) Veröffentlichungstag und Bekanntmachung des Hinweises auf die Patenterteilung: **29.04.2020**
(21) Anmeldenummer: 18195604.6
(22) Anmeldetag: 20.09.2018
(51) Int. Cl.: B62B 1/24, B62B 1/26, B62B 5/06, B62B 1/00

(54) **TRANSPORTWAGEN**
TRANSPORT TROLLEY
CHARIOT DE TRANSPORT

(30) Priorität: 20.11.2017 DE 202017107015 U
(43) Veröffentlichungstag der Anmeldung: 22.05.2019
(73) Patentinhaber: Vormann, Gerhard, 58256 Ennepetal (DE)
(72) Erfinder: Vormann, Gerhard, 58256 Ennepetal (DE)
(74) Vertreter: Köchling, Conrad-Joachim

(56) Entgegenhaltungen:
- DE-U1- 8 214 212
- FR-A1- 2 802 164
- US-A- 3 389 818
- US-B1- 9 365 224

## Beschreibung

Die Erfindung betrifft einen Transportwagen zum Transportieren von Gegenständen des täglichen Bedarfs, die mit einem Henkel oder Bügel oder dergleichen Tragegriff ausgestattet sind, wobei der Transportwagen ein Gestell aufweist, an dessen einem Endbereich ein Griff und an dessen anderem Endbereich ein Fuß angeordnet ist, wobei in Bereich des Fußes eine das Gestell durchgreifende Radachse mit daran drehbar gelagerten Rädern angeordnet ist und wobei schwenkbar gehaltene Aufnahmen zum Halten von Henkeln oder Bügeln oder dergleichen Tragegriffen von Gegenständen angeordnet sind.

Im Stand der Technik sind verschiedene Transportwagen beispielsweise als Sackkarre oder Einkaufstrolley bekannt. Solche Wagen weisen ein leiter- oder gitterartiges Gestell auf, an dessen einen Ende Griffe angeordnet sind und dessen zweites Ende einen Fuß mit einer Abstellfläche aufweist, wobei am Fußende eine Achse mit Rädern angeordnet ist. Mittels einer Sackkarre können auf der Abstellfläche des Fußes abgestellte Behälter wie beispielsweise Eimer, Körbe oder Kannen mit verschiedenen Inhalten transportiert werden.

Zum Einkaufen eignen sich insbesondere Einkaufstrolleys, bei denen eine Tasche an dem Gestell befestigt und durch den Fuß unterseitig abgestützt ist.

Der Fuß dient jeweils auch als Stütze für den Transportwagen, mit der der Wagen in abgestelltem Zustand am Boden abgestützt und in einer aufrechten Position gehalten ist. Zugleich ist durch den am Boden aufstehenden Fuß ein Wegrollen des Wagens verhindert.

Zum Bewegen des Transportwagens, übt der Benutzer eine Kraft auf die Griffe aus und schwenkt das Gestell samt Fuß um die Radachse in eine Schräglage. Der Transportwagen kann in die gewünschte Richtung geschoben oder gezogen werden.

Nachteilig an solchen Transportwagen ist, dass die beförderten Behälter immer in einer Schräglage transportiert werden. Beim Transport offener Behälter, wie Eimer, Kannen, Körbe oder dergleichen, in denen Flüssigkeiten oder rieselfähige Materialien enthalten sind, laufen diese aus oder werden verschüttet. Insbesondere beim Überfahren von Bodenunebenheiten, wenn die Gegenstände Erschütterungen ausgesetzt sind oder beim Bergauf- oder Bergabfahren, wenn der Wagen stark geneigt ist, werden die Inhalte verschüttet oder laufen aus. Ein weiterer Nachteil liegt darin, dass der Benutzer bei der Verwendung solcher Wagen eine gekrümmte Haltung einnehmen muss. Meist ist auch der Gang des Benutzers beeinträchtigt bzw. seine Schrittlänge unnatürlich verkürzt, damit er sich mit den Rädern nicht selbst verletzt.

Aus der US 3 389 818 A ist ein gattungsähnlicher Transportwagen gemäß dem Oberbegriff von Anspruch bekannt. Hierbei ist ein rahmenartiges Gestell vorgesehen, welches zwei aufrechte

Gestellbügel aufweist, die voneinander Abstand haben. Nahe der oberen Enden der Gestellbügel sind Aufhängereinrichtungen schwenkbeweglich befestigt, in die ein Transportgefäß zur Aufnahme von Transportgut angehängt werden kann. Zur Halterung des Transportgefäßes an den entsprechenden Aufnahmen sind am Transportgefäß im Wesentlichen rechteckige Bügel befestigt, von denen jeweils einer in die Aufhängeeinrichtung am Gestellschenkel eingehängt werden kann, sodass das Transportgefäß lagesicher gehalten ist.

Aus der US 9 365 224 B1 ist ein Tragestell für Rucksäcke oder dergleichen bekannt, welches in eine Transportlage zusammengeklappt werden kann. Das Transportgut, nämlich der Rucksack, ist bei Benutzung dieses Transportwagens stets in unterschiedlicher Richtung geneigt, sodass ein solches Gerät nicht für den Transport von Gegenständen geeignet ist, die mit einem Henkel oder Bügel oder dergleichen Tragegriff ausgestattet sind und die zum Transport von flüssigem oder rieselfähigem Schüttgut dienen könnten.

Aus der FR 2 802 164 A1 ist ein Transportfahrzeug bekannt, welches zerlegbar ist und im normalen Gebrauchszustand dazu geeignet ist, einen großen sackförmigen Behälter zu halten. Dazu sind an einem mehrschenkligem Gestell über Quer- und Längsachsen Aufhängemöglichkeiten vorgesehen, in die Aufhängeösen des sackartigen Behälters eingehängt werden können, sodass dieser mit dem Transportfahrzeug transportiert werden kann.

Aus der DE 82 14 212 U1 ist ein Transportwagen bekannt, der zum Transport von Gegenständen des täglichen Bedarfs wie beispielsweise Gießkannen geeignet ist. Hierzu ist ein mehrschenkliges Gestell vorgesehen, welches am oberen Endbereich eine Querstrebe aufweist, an der ein hakenförmiges Element befestigt ist. In dieses hakenförmige Element kann der Bügel einer Gießkanne oder dergleichen eingehängt werden.

Ausgehend von diesem Stand der Technik liegt der Erfindung die Aufgabe zugrunde, einen Transportwagen zu schaffen, mit dem offene Behälter, wie Eimer, Kannen, Körbe oder dergleichen, mit flüssigem oder rieselfähigem Inhalt transportiert werden können, ohne die Inhalte zu verschütten, wobei bei der Benutzung des Wagens gleichzeitig eine gesunde Körperhaltung eingenommen werden kann.

Zur Lösung dieser Aufgabe wird vorgeschlagen, dass das Gestell aus einer einzigen im Wesentlichen vertikal ausgerichteten Gestellstrebe besteht, an deren einem Ende der Griff und deren anderem Ende der Fuß angeordnet ist, wobei der Griff und der Fuß als in entgegengesetzter Richtung von der Gestellstrebe abragende Streben ausgebildet sind, die mit der Gestellstrebe eine z-artige Form bilden, dass mindestens eine weitere Achse die Gestellstrebe im griffnahen Endbereich durchgreift, wobei an deren Enden die schwenkbar gehaltenen Aufnahmen zum Halten von Henkeln oder Bügeln oder dergleichen Tragegriffen von Gegenständen angeordnet sind, wobei die weitere Achse parallel zur Radachse ausgerichtet ist, dass die Aufnahmen an den Enden der weiteren Achse in einem Abstand zu der im Wesentlichen vertikal ausgerichteten Gestellstrebe angeordnet sind, und dass die Aufnahmen als V-förmige Halteelemente ausgebildet sind.

Die Gegenstände können mit einem Henkel oder Bügel oder dergleichen Tragegriff an die schwenkbaren Aufnahmen gehängt werden. Dadurch hängen die Gegenstände stets lotrecht herunter und ein Auslaufen oder Verschütten des Inhaltes ist verhindert. Beispielsweise können mit Wasser gefüllte Gießkannen oder mit Erde oder Sand befüllte Eimer oder sonstige Behälter an die Aufnahmen angehängt werden.

Die z-artige Form gewährleistet eine komfortable Benutzung des Transportwagens, ohne eine gekrümmte Haltung einnehmen zu müssen. Die Gestellstrebe ist im Wesentlichen vertikal ausgerichtet, wobei der Fuß in einer ausreichenden Entfernung zum Boden angeordnet ist, sodass der Wagen ungebremst geschoben oder gezogen werden kann. Der abragende Griff ermöglicht dem Benutzer einen uneingeschränkten Gang, da er in einem gewissen Abstand zu den Rädern vor bzw. hinter dem Wagen läuft und sich die Räder außerhalb der Reichweite seiner Beine und/oder Füße befinden.

Ist der Wagen abgestellt, ist die Gestellstrebe in Richtung des Fußes geneigt und der Fuß durch das in dessen Richtung wirkenden Gewichts des Gestells an den Boden gedrückt. Hängt zusätzlich noch ein Gegenstand lotrecht in den Aufnahmen, wirkt dessen Gewicht als zusätzlicher Druck auf den Fuß, sodass dieser fest an den Boden gepresst ist und ein sicherer Stand des Transportwagens gewährleistet ist. Um den Wagen bewegen zu können, muss der Benutzer lediglich einen geringen Druck auf den Griff ausüben, sodass die Gestellstrebe und der Fuß um die Radachse geschwenkt werden und der Fuß vom Boden angehoben ist. In dieser Position kann der Transportwagen frei rollen. Der Griff und die Gestellstrebe wirken dabei als Hebelarme der einwirkenden Kraft und erleichtern das Verschwenken des Gestells um die Radachse.

Durch die V-förmigen Halteelemente ergibt sich der Vorteil, dass der Griff des angehängten Gegenstandes durch das Eigengewicht des Gegenstandes in die Spitze des V-förmigen Halteelementes gezogen wird und darin eingeklemmt ist. Gießkannen, Eimer oder sonstige Gegenstände sind dadurch fest in der Aufnahme gehalten und können dadurch nicht darin verrutschen und deren Inhalt verlieren.

Auch wenn mit dem Transportwagen unebene Wege befahren werden und die in den Halteelementen hängenden Gegenstände Erschütterungen ausgesetzt sind, werden diese sicher in den Halteelementen gehalten.

Durch die Anordnung der Aufnahmen an den Enden der Achse können die Gegenstände frei in den Aufnahmen pendeln, ohne an die Gestellstrebe zu stoßen. Eine lotrechte Ausrichtung ist somit jederzeit gewährleistet.

Bevorzugt ist vorgesehen, dass die Aufnahmen der weiteren Achse vorzugsweise lotrecht zur Radachse angeordnet sind.

Dadurch ist das Gewicht der angehängten Gegenstände während des Transportes überwiegend vertikal über der Radachse angeordnet und eine ausgeglichene Gewichtsverteilung gewährleistet. So lässt sich der Transportwagen komfortabel ohne großen Kraftaufwand schieben oder ziehen.

Es ist vorzugsweise vorgesehen, dass die Gestellstrebe und der Griff und der Fuß Rohrprofile oder dergleichen Hohlprofile sind.

Dadurch weist der Transportwagen ein besonders geringes Eigengewicht auf. Der Wagen kann in einfacher Weise auch durch unebenes Gelände gezogen oder geschoben werden und ist auch für körperlich eingeschränkte Benutzer geeignet.

Bevorzugt ist vorgesehen, dass der Griff und/oder der Fuß mit einem Schwenkgelenk an der Gestellstrebe befestigt ist oder sind und in beliebigen Positionen arretierbar ist oder sind.

Der Griff und/oder der Fuß kann bzw. können vollständig eingeschwenkt werden, sodass der Transportwagen platzsparend verstaut oder beispielsweise in einem PKW transportiert werden kann. Außerdem kann eine beliebige Verstellung und Arretierung der Streben erfolgen, sodass der Benutzer den Wagen individuell auf seine Bedürfnisse einstellen kann.

Vorzugsweise ist vorgesehen, dass in der Gebrauchslage der Winkel zwischen dem Griff und der Gestellstrebe und/oder zwischen dem Fuß und der Gestellstrebe größer als 90° ist.

Dadurch ist eine besonders komfortable Bedienung und Benutzung des Transportwagens möglich. Diese Ausrichtung der Streben zueinander vereinfacht das Schwenken des Gestells um die Radachse. Außerdem ist der Wagen durch den schräg abragenden Fuß frühzeitig und sicher gebremst.

Es ist bevorzugt vorgesehen, dass eine oder mehrere weitere Achsen mit schwenkbaren Aufnahmen an der Gestellstrebe befestigt sind.

So können gleichzeitig mehrere Gegenstände transportiert werden.

Vorzugsweise ist vorgesehen, dass eine oder mehrere eine Stellfläche bildende Aufnahmeplatte an dem Gestell angeordnet ist oder sind.

Auf solchen Aufnahmeplatten können weitere Gegenstände transportiert werden.

Bevorzugt ist vorgesehen, dass der als Strebe ausgebildete Griff und/oder Fuß als teleskopartig verstellbare Strebe ausgebildet ist oder sind und in der Länge verstellbar ist oder sind.

Der Benutzer kann den Transportwagen auf seine Bedürfnisse einstellen. Durch eine Verlängerung des Griffes kann beispielsweise der Hebelarm verlängert werden, sodass ein körperlich beeinträchtigter Benutzer eine geringere Kraft zum Schwenken des Wagens aufwenden muss. Durch Verlängern oder Verkürzen des Fußes kann die Neigung des Wagens, insbesondere der Gestellstrebe und damit auch die Gewichtsverteilung des angehängten Gewichtes beim Abstellen des Wagens variiert werden. Je kürzer die Strebe des Fußes eingestellt ist, desto stärker ist die Gestellstrebe in abgestelltem Zustand in Richtung des Fußes geneigt, sodass der Transportwagen beim Abstellen auch an geneigten Wegen einen besonders sicheren Stand hat.

Ein Ausführungsbeispiel der Erfindung ist in den Zeichnungen dargestellt und im Folgenden näher beschrieben.

Es zeigt:
- Fig.1: einen erfindungsgemäßen Transportwagen in Seitenansicht;
- Fig.2: den Transportwagen in Vorderansicht;

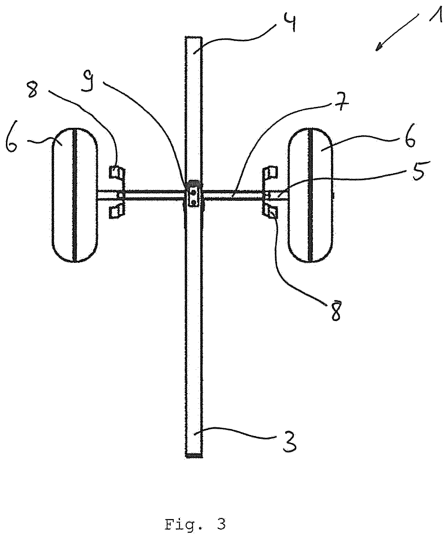

- Fig.3: den Transportwagen in Draufsicht;

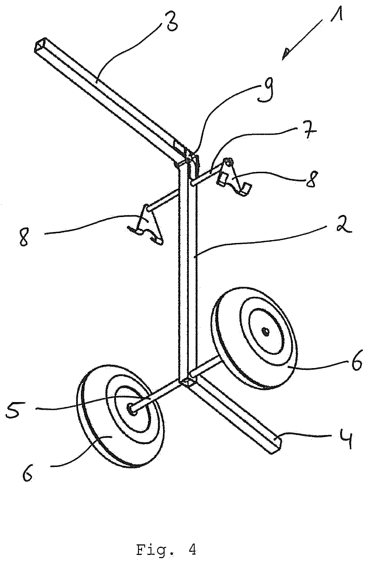

- Fig.4: den Transportwagen in Ansicht.

Die Figuren zeigen einen Transportwagen 1 zum Transportieren von Gegenständen des täglichen Bedarfs, insbesondere von Gegenständen, die mit einem Henkel oder Bügel oder dergleichen Tragegriff ausgestattet sind.

Der Transportwagen 1 weist ein Gestell mit einer im Wesentlichen vertikal ausgerichteten Gestellstrebe 2 auf, an deren einem Ende ein Griff 3 und an deren zweitem Ende ein Fuß 4 angeordnet ist, wobei der Griff 3 und der Fuß 4 als in entgegengesetzter Richtung von der Gestellstrebe 2 abragende Streben ausgebildet sind, die mit der Gestellstrebe 2 eine z-artige Form bilden.

Im Bereich des Fußes 4 ist eine das Gestell durchgreifende Radachse 5 mit daran drehbar gelagerten Rädern 6 angeordnet. Im griffnahen Endbereich durchgreift eine weitere Achse 7 die Gestellstrebe 2, wobei an den Enden der Achse 7 schwenkbar gehaltene Aufnahmen 8 zum Halten der Henkel oder Bügel oder dergleichen Tragegriffe von Gegenständen angeordnet sind. Die weitere Achse 7 ist parallel zur Radachse 5 ausgerichtet. Die Gegenstände können mit einem Henkel oder Bügel oder dergleichen Tragegriff an die schwenkbaren Aufnahmen 8 gehängt werden und hängen stets lotrecht herunter, sodass ein Auslaufen oder Verschütten des Inhaltes verhindert ist. Beispielsweise können mit Wasser gefüllte Gießkannen oder mit Erde oder Sand befüllte Eimer oder sonstige Behälter an die Aufnahmen 8 angehängt werden.

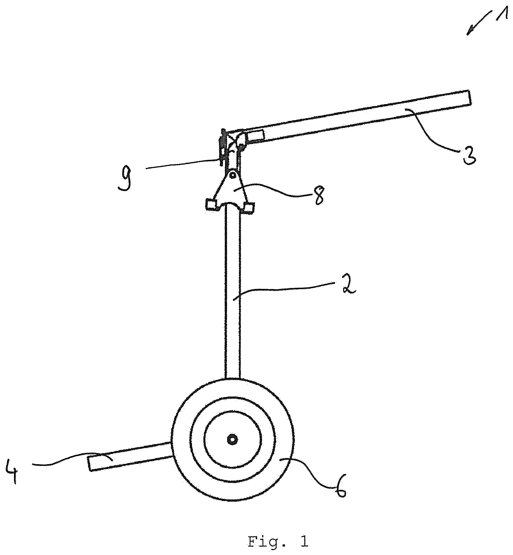

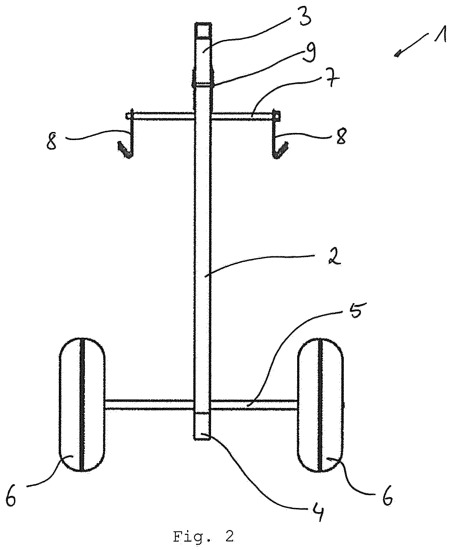

Die z-artige Form gewährleistet eine komfortable Benutzung des Transportwagens 1, ohne dass der Benutzer eine gekrümmte Haltung einnehmen muss. Wie in Fig. 1 und Fig. 2 gezeigt ist, ist die Gestellstrebe 2 im Wesentlichen vertikal ausgerichtet, wobei der Fuß 4 in einer ausreichenden Entfernung zum Boden angeordnet ist, sodass der Transportwagen 1 ungebremst geschoben oder gezogen werden kann. Der abragende Griff 3 ermöglicht dem Benutzer einen uneingeschränkten Gang, da er in einem gewissen Abstand zu den Rädern 6 vor bzw. hinter dem Transportwagen 1 läuft und sich die Räder 6 außerhalb der Reichweite seiner Beine und/oder Füße befinden. Ist der Transportwagen 1 abgestellt, ist die Gestellstrebe 2 in Richtung des Fußes 4 geneigt und der Fuß 4 durch das Gewicht des Gestells, welches in Richtung des Fußes wirkt, an den Boden gedrückt. Hängt zusätzlich noch ein Gegenstand lotrecht in den Aufnahmen 8, wirkt dessen Gewicht als zusätzlicher Druck auf den Fuß 4, sodass dieser fest an den Boden gepresst ist. So ist ein sicherer Stand des Transportwagens 1 gewährleistet.

Um den Transportwagen 1 zu bewegen, übt der Benutzer einen geringen Druck auf den Griff 3 aus, sodass die Gestellstrebe 2 und der Fuß 4 um die Radsachse 5 geschwenkt werden und der Fuß 4 vom Boden angehoben ist. In dieser Position kann der Transportwagen 1 frei rollen. Der Griff 3 und die Gestellstrebe 2 wirken dabei als Hebelarm der eingeleiteten Kraft und erleichtern das verschwenken des Gestells um die Radachse 5.

Die Aufnahmen 8 der weiteren Achse 7 sind vorzugsweise lotrecht zur Radachse 5 angeordnet. Dadurch ist das Gewicht der angehängten Gegenstände während des Transportes überwiegend vertikal über der Radachse 5 angeordnet, sodass eine ausgeglichene Gewichtsverteilung gewährleistet ist. So lässt sich der Transportwagen 1 komfortabel ohne großen Kraftaufwand schieben oder ziehen. Um den Kraftaufwand zusätzlich gering zu halten, sind die Gestellstrebe 2 und der Griff 3 und der Fuß 4 Rohrprofile oder dergleichen Hohlprofile. Dadurch weist der Transportwagen 1 ein besonders geringes Eigengewicht auf. Der Transportwagen 1 kann in einfacher Weise auch durch unebenes Gelände gezogen oder geschoben werden und ist auch für körperlich beeinträchtigte Benutzer geeignet.

Der Griff 3 ist mit einem Schwenkgelenk 9 an der Gestellstrebe 2 befestigt und in beliebigen Positionen arretierbar, sodass der Griff 3 vollständig eingeschwenkt werden kann, um den Transportwagen 1 platzsparend zu verstauen oder beispielsweise in einem PKW zu transportieren. Außerdem kann eine beliebige Verstellung und Arretierung des Griffes 3 erfolgen, sodass der Benutzer den Transportwagen 1 individuell auf seine Bedürfnisse einstellen kann. Auch der Fuß 4 könnte zu diesen Zwecken mit einem Schwenkgelenk 9 an der Gestellstrebe 2 befestigt sein.

Die Aufnahmen 8 sind als V-förmige Halteelemente ausgebildet. Dabei ergibt sich der Vorteil, dass der Griff des angehängten Gegenstandes durch das Eigengewicht des Gegenstandes in die Spitze des V-förmigen Halteelementes gezogen wird und darin eingeklemmt ist. Gießkannen, Eimer oder sonstige Gegenstände sind dadurch fest in der Aufnahme gehalten und können dadurch nicht darin verrutschen und deren Inhalt verlieren. Auch wenn mit dem Transportwagen 1 unebene Wege befahren werden und die in den Aufnahmen 8 hängenden Gegenstände Erschütterungen ausgesetzt sind, werden diese sicher in den Aufnahmen 8 gehalten.

Wie in Fig. 1 gezeigt ist, ist der Winkel zwischen dem Griff 3 und der Gestellstrebe 2 und zwischen dem Fuß 4 und der Gestellstrebe 2 in der Gebrauchslage größer als 90°. Dadurch ist eine besonders komfortable Bedienung und Benutzung des Transportwagens 1 möglich. Diese Ausrichtung der Streben zueinander vereinfacht das Schwenken des Gestells um die Radachse 5. Außerdem ist der Transportwagen 1 durch den schräg abragenden Fuß 4 frühzeitig und sicher gebremst.

Die Aufnahmen 8 an den Enden der weiteren Achse 7 sind in einem Abstand zu der im Wesentlichen vertikal ausgerichteten Gestellstrebe 2 angeordnet, sodass die daran angehängten Gegenstände frei in den Aufnahmen 8 pendeln ohne an die Gestellstrebe 2 zu stoßen. Eine lotrechte Ausrichtung ist somit jederzeit gewährleistet.

Es können auch weitere Achsen 7 mit schwenkbaren Aufnahmen 8 an der Gestellstrebe 2 befestigt sein, um mehrere Gegenstände zu transportieren. Darüber hinaus können auch eine oder mehrere eine Stellfläche bildende Aufnahmeplatten an dem Gestell angeordnet sein, um darauf Gegenstände beispielsweise zum Transport abzustellen.

Der als Strebe ausgebildete Griff 3 und/oder Fuß 4 kann bzw. können als teleskopartige, in der Länge verstellbare Streben ausgebildet sein. Der Benutzer kann den Transportwagen 1 dann auf seine Bedürfnisse einstellen. Durch eine Verlängerung des Griffes 3 kann beispielsweise der Hebelarm verlängert werden, sodass ein körperlich beeinträchtigter Benutzer eine geringere Kraft zum Schwenken des Gestells aufwenden muss. Durch Verlängern oder Verkürzen des Fußes 4 kann die Neigung des Transportwagens 1, insbesondere der Gestellstrebe 2 und damit auch die Gewichtsverteilung des angehängten Gewichtes beim Abstellen des Transportwagens 1 variiert werden, sodass der Transportwagen 1 beim Abstellen immer einen sicheren Stand hat, auch an besonders stark geneigten Wegen.

Die Erfindung ist nicht auf das Ausführungsbeispiel beschränkt, sondern im Rahmen der Offenbarung der Patentansprüche vielfach variabel.

## Patentansprüche

1. Transportwagen (1) zum Transportieren von Gegenständen des täglichen Bedarfs, die mit einem Henkel oder Bügel oder dergleichen Tragegriff ausgestattet sind, wobei der Transportwagen ein Gestell aufweist, an dessen einem Endbereich ein Griff (3) und an dessen anderem Endbereich ein Fuß (4) angeordnet ist, wobei in Bereich des Fußes (4) eine das Gestell durchgreifende Radachse (5) mit daran drehbar gelagerten Rädern (6) angeordnet ist und wobei schwenkbar gehaltene Aufnahmen (8) zum Halten von Henkeln oder Bügeln oder dergleichen Tragegriffen von Gegenständen angeordnet sind, **dadurch gekennzeichnet, dass** das Gestell aus einer einzigen im Wesentlichen vertikal ausgerichteten Gestellstrebe (2) besteht, an deren einem Ende der Griff (3) und deren anderem Ende der Fuß (4) angeordnet ist, wobei der Griff (3) und der Fuß (4) als in entgegengesetzter Richtung von der Gestellstrebe (2) abragende Streben ausgebildet sind, die mit der Gestellstrebe (2) eine z-artige Form bilden, dass mindestens eine weitere Achse (7) die Gestellstrebe (2) im griffnahen Endbereich durchgreift, wobei an deren Enden die schwenkbar gehaltenen Aufnahmen (8) zum Halten von Henkeln oder Bügeln oder dergleichen Tragegriffen von Gegenständen angeordnet sind, wobei die weitere Achse (7) parallel zur Radachse (5) ausgerichtet ist, dass die Aufnahmen (8) an den Enden der weiteren Achse (7) in einem Abstand zu der im Wesentlichen vertikal ausgerichteten Gestellstrebe (2) angeordnet sind, und dass die Aufnahmen (8) als V-förmige Halteelemente ausgebildet sind.

2. Transportwagen nach Anspruch 1, **dadurch gekennzeichnet, dass** die Aufnahmen (8) der weiteren Achse (7) lotrecht zur Radachse (5) angeordnet sind.

3. Transportwagen nach Anspruch 1 oder 2, **dadurch gekennzeichnet, dass** die Gestellstrebe (2) und der Griff (3) und der Fuß (4) Rohrprofile oder dergleichen Hohlprofile sind.

4. Transportwagen nach einem der Ansprüche 1 bis 3, **dadurch gekennzeichnet, dass** der Griff (3) und/oder der Fuß (4) mit einem Schwenkgelenk (9) an der Gestellstrebe (2) befestigt ist oder sind und in beliebigen Positionen arretierbar ist oder sind.

5. Transportwagen nach einem der Ansprüche 1 bis 4, **dadurch gekennzeichnet, dass** in der Gebrauchslage der Winkel zwischen dem Griff (3) und der Gestellstrebe (2) und/oder zwischen dem Fuß (4) und der Gestellstrebe (2) größer als 90° ist.

6. Transportwagen nach einem der Ansprüche 1 bis 5, **dadurch gekennzeichnet, dass** eine oder mehrere weitere Achsen (7) mit schwenkbaren Aufnahmen (8) an der Gestellstrebe (2) befestigt sind.

7. Transportwagen nach einem der Ansprüche 1 bis 6, **dadurch gekennzeichnet, dass** eine oder mehrere eine Stellfläche bildende Aufnahmeplatte/n an dem Gestell angeordnet ist oder sind.

8. Transportwagen nach einem der Ansprüche 1 bis 7, **dadurch gekennzeichnet, dass** der als Strebe ausgebildete Griff (3) und/oder Fuß (4) als teleskopartig verstellbare Strebe ausgebildet ist oder sind und in der Länge verstellbar ist oder sind.

## Claims

1. A transport trolley (1) for transporting articles of daily use, equipped with a handle or bracket or the like carrying handle, the transport trolley including a rack, at one end section of which a handle (3) and at the other end section of which a foot (4) is disposed, in the region of the foot (4) a wheel axle (5) passing through the rack and having fitted thereon rotatably supported wheels (6) being disposed, and pivotally held receptacles (8) for holding handles or brackets or the like carrying handles of articles being disposed, **characterized by that** the rack is composed of a single substantially vertically oriented rack strut (2), at the one end of which the handle (3) is disposed and at the other end of which the foot (4) is disposed, the handle (3) and the foot (4) being configured as struts projecting in opposing directions from the rack strut (2), said struts forming a z-like shape with the rack strut (2), that at least one further axle (7) passes through the rack strut (2) in the end section close to the handle, at the ends of which the pivotally held receptacles (8) for holding handles or brackets or the like carrying handles of articles are disposed, the further axle (7) being oriented in parallel to the wheel axle (5), that the receptacles (8) at the ends of the further axle (7) are disposed in a distance to the substantially vertically oriented rack strut (2), and that the receptacles (8) are configured as V-shaped holding elements.

2. The transport trolley according to claim 1, **characterized by that** the receptacles (8) of the further axle (7) are disposed perpendicularly to the wheel axle (5).

3. The transport trolley according to claim 1 or 2, **characterized by that** the rack strut (2) and the handle (3) and the foot (4) are pipe profiles or the like hollow profiles.

4. The transport trolley according to one of claims 1 to 3, **characterized by that** the handle (3) and/or the foot (4) is or are fixed at the rack strut (2) through a swivel joint (9) and is or are lockable in arbitrary positions.

5. The transport trolley according to one of claims 1 to 4, **characterized by that** in the position of use, the angle between the handle (3) and the rack strut (2) and/or between the foot (4) and the rack strut (2) is greater than 90°.

6. The transport trolley according to one of claims 1 to 5, **characterized by that** one or more further axles (7) are fixed with pivotal receptacles (8) at the rack strut (2).

7. The transport trolley according to one of claims 1 to 6, **characterized by that** one or more receiving plate(s) forming a control surface is or are disposed at the rack.

8. The transport trolley according to one of claims 1 to 7, **characterized by that** the handle (3) and/or foot (4) formed as a strut is or are configured as a telescopically adjustable strut and is or are adjustable in length.

## Revendications

1. Chariot de transport (1) pour transporter des articles d'usage quotidien, équipés d'une anse ou d'un étrier ou semblable poignée de portage, le chariot de transport comportant un châssis, à une partie d'extrémité duquel une poignée (3) est installée et à l'autre partie d'extrémité duquel un pied (4) est installé, dans la région du pied (4) un essieu (5) traversant le châssis et portant des roues (6) montées en rotation étant installé, et des logements (8) pivotants pour retenir des anses ou étriers ou semblables poignées de portage d'articles étant installés, **caractérisé en ce que** le châssis consiste en une seule entretoise de châssis (2) orientée essentiellement verticalement, à l'une extrémité de laquelle la poignée (3) est installée et à l'autre extrémité de laquelle le pied (4) est installé, la poignée (3) et le pied (4) étant configurés comme des entretoises faisant saillie dans des directions opposées de l'entretoise de châssis (2), ces entretoises réalisant une forme en z avec l'entretoise de châssis (2), qu'au moins un essieu additionnel (7) passe à travers l'entretoise de châssis (2) dans la partie d'extrémité proche de la poignée, aux extrémités duquel les logements (8) pivotants pour retenir des anses ou étriers ou semblables poignées de portage d'articles étant installés, l'essieu additionnel (7) étant orienté en parallèle à l'essieu (5), que les logements (8) aux extrémités de l'essieu additionnel (7) sont installés à distance de l'entretoise de châssis (2) orientée essentiellement verticalement, et que les logements (8) sont configurés comme des éléments de retenue en forme de V.

2. Chariot de transport selon la revendication 1, **caractérisé en ce que** les logements (8) de l'essieu additionnel (7) sont installés perpendiculairement à l'essieu (5).

3. Chariot de transport selon la revendication 1 ou 2, **caractérisé en ce que** l'entretoise de châssis (2) et la poignée (3) et le pied (4) sont des profilés tubulaires ou semblables profilés creux.

4. Chariot de transport selon une des revendications 1 à 3, **caractérisé en ce que** la poignée (3) et/ou le pied (4) est ou sont fixés à l'entretoise de châssis (2) par une articulation de pivotement (9) et est arrêtable ou sont arrêtables dans des positions quelconques.

5. Chariot de transport selon une des revendications 1 à 4, **caractérisé en ce que** dans la position de fonctionnement, l'angle entre la poignée (3) et l'entretoise de châssis (2) et/ou entre le pied (4) et l'entretoise de châssis (2) est supérieur à 90°.

6. Chariot de transport selon une des revendications 1 à 5, **caractérisé en ce qu**'un ou plusieurs essieux (7) additionnels sont fixés avec des logements (8) pivotants à l'entretoise de châssis (2).

7. Chariot de transport selon une des revendications 1 à 6, **caractérisé en ce qu**'un ou plusieurs plaque(s) de logement formant uns surface de commande est installée ou sont installées au châssis.

8. Chariot de transport selon une des revendications 1 à 7, **caractérisé en ce que** la poignée (3) et/ou le pied (4) formée ou formé comme entretoise est configuré ou sont configurés comme entretoise télescopiquement réglable et est réglable ou sont réglables en longueur.
